# EUROPEAN PATENT APPLICATION

(11) **EP 4 434 786 A1**
(43) Date of publication of application: **25.09.2024**
(21) Application number: 23778444.2
(22) Date of filing: 31.03.2023
(51) Int. Cl.: B60K 1/04, B60L 50/60

(54) **VEHICLE**

(30) Priority: 31.03.2022 CN 202210346559
(71) Applicant: BYD Company Limited, Shenzhen, Guangdong 518118 (CN)
(72) Inventor: LIAN, Yubo, Shenzhen, Guangdong 518118 (CN); YI, Bengang, Shenzhen, Guangdong 518118 (CN); LING, Heping, Shenzhen, Guangdong 518118 (CN); YAN, Junfei, Shenzhen, Guangdong 518118 (CN); LIU, Tengyong, Shenzhen, Guangdong 518118 (CN)
(74) Representative: Arnold & Siedsma
(86) International application number: PCT/CN2023/085425
(87) International publication number: WO 2023/186080

(57) **Abstract**

A vehicle is provided. The vehicle includes: an underbody, a front subframe, and a battery pack. The front subframe is connected to the underbody. The battery pack is connected to the underbody, and is arranged on a lower side of the underbody. A rear end surface of the front subframe forms a limiting surface for forward extension of the battery pack, and at least a part of an upper surface of the battery pack forms a floor of a vehicle body.

## Description

### CROSS-REFERENCE TO RELATED APPLICATIONS

This application claims priority to Chinese Patent Application No. 202210346559.4, filed with on March 31, 2022 and entitled "VEHICLE". The entire content of the above-referenced application is incorporated herein by reference.

### FIELD

The present disclosure relates to the field of vehicles, and in particular, to a vehicle.

### BACKGROUND

In the related art, in a new energy vehicle, a battery pack mounting longitudinal beam is generally arranged below a floor of a vehicle body for mounting a battery pack. However, due to a structure of an underbody, available space for the battery pack is relatively small, and a relatively large gap is formed between the battery pack and the floor of the vehicle body. Consequently, both endurance of the vehicle and mobility of the vehicle are affected.

### SUMMARY

The present disclosure aims to resolve one of the technical problems in the related art. Therefore, the present disclosure provides a vehicle, which has high space utilization and good safety performance.

A vehicle according to an embodiment of the present disclosure includes: an underbody; a front subframe, the front subframe being connected to the underbody; and a battery pack, the battery pack being connected to the underbody, and being arranged on a lower side of the underbody. A rear end surface of the front subframe forms a limiting surface for forward extension of the battery pack, and at least a part of an upper surface of the battery pack forms a floor of a vehicle body.

According to the vehicle in the embodiment of the present disclosure, the rear end surface of the front subframe forms the limiting surface for forward extension of the battery pack, so that a dimension of the battery pack in an X direction can be increased, to improve space utilization, and the battery pack can serve as a force transmission structure for force transmission, to improve safety performance of the vehicle. The at least a part of the upper surface of the battery pack forms the floor of the vehicle body, so that a height of the whole vehicle can be lowered, and space utilization and passenger space are increased.

In some embodiments, a minimum distance between a front end surface of the battery pack and the rear end surface of the front subframe is d₁, where d₁ satisfies: 10 mm ≤ d₁ ≤ 100 mm.

In some embodiments, the underbody includes: a left rocker rail and a right rocker rail. The right rocker rail and the left rocker rail are oppositely arranged in a width direction of the vehicle body. The battery pack is connected to the left rocker rail and the right rocker rail to cause the left rocker rail and the right rocker rail to form a battery pack mounting beam.

In some embodiments, the underbody includes: a left rocker rail and a right rocker rail. The right rocker rail and the left rocker rail are oppositely arranged in a width direction of the vehicle body. A front end surface of the battery pack extends beyond a front end surface of the left rocker rail and a front end surface of the right rocker rail in a length direction of the vehicle.

In some embodiments, the underbody includes: a front cross beam, a left rocker rail, and a right rocker rail. The right rocker rail and the left rocker rail are oppositely arranged in a width direction of the vehicle body. An extending length of the front cross beam in the width direction of the vehicle body is greater than a distance from an inner surface of the left rocker rail to an inner surface of the right rocker rail. Projections of a front end surface of the left rocker rail and a front end surface of the right rocker rail in the width direction overlap a projection of the front cross beam in the width direction.

In some embodiments, the underbody further includes: a front cross beam and A-pillars. The A-pillars are oppositely arranged. Two ends of the front cross beam are connected to the A-pillars.

In some embodiments, the underbody further includes a front longitudinal beam. The front longitudinal beam is connected to the front cross beam. A rear side of the front longitudinal beam includes an upper-side force transmission structure and a lower-side force transmission structure. A rear end of the upper-side force transmission structure is connected to the front cross beam, and a rear end bottom surface of the lower-side force transmission structure is spaced apart from the battery pack in a vertical direction to form a sealed gap.

In some embodiments, the lower-side force transmission structure is a Y-shaped structure; or the lower-side force transmission structure is connected to the left rocker rail, the right rocker rail, and a central channel.

In some embodiments, the rear end bottom surface of the lower-side force transmission structure is parallel to a top surface of the battery pack.

In some embodiments, the underbody further includes a front longitudinal beam. A rear end bottom surface of the front longitudinal beam is spaced apart from a top surface of the battery pack in a vertical direction to form a sealed gap, or the rear end bottom surface of the front longitudinal beam is parallel to the top surface of the battery pack.

In some embodiments, the front longitudinal beam includes a left-front longitudinal beam and a right-front longitudinal beam spaced apart in a left-right direction of the vehicle. A bottom cross beam is connected between the left-front longitudinal beam and the right-front longitudinal beam. A bottom surface of the bottom cross beam is spaced apart from the top surface of the battery pack in the vertical direction, and the bottom surface of the bottom cross beam is parallel to the top surface of the battery pack.

In some embodiments, the vehicle further includes a rear subframe. The rear subframe is connected to the underbody. A front end surface of the rear subframe forms a limiting surface for backward extension of the battery pack.

In some embodiments, the underbody further includes: a middle cross beam and two rear longitudinal beams. The two rear longitudinal beams are spaced apart. The middle cross beam extends in the width direction of the vehicle, and is connected to the rear longitudinal beams and the left rocker rail and the right rocker rail.

In some embodiments, the middle cross beam forms the battery pack mounting beam. A lower surface of the middle cross beam is spaced apart from a top surface of the battery pack in a vertical direction to form a sealed gap, or subframe mounting bases are arranged at intervals on the middle cross beam.

In some embodiments, the battery pack includes: an upper housing of the battery pack, a lower housing of the battery pack, and at least one battery cell. The upper housing of the battery pack and the lower housing of the battery pack form an accommodating space, and the at least one battery cell is arranged in the accommodating space.

At least a part of the upper surface of the upper housing of the battery pack forms the floor of the vehicle body.

In some embodiments, the battery cell is fixedly connected to the upper housing of the battery pack. A top surface of the battery cell is bonded with the upper housing of the battery pack; or the lower housing of the battery pack is a cooling plate, and a bottom surface of the battery cell is bonded with the lower housing of the battery pack through a thermal adhesive.

In some embodiments, the battery pack includes at least one battery cell. A length direction of the battery cell is the length direction of the vehicle. The battery pack includes multiple battery cells. The multiple battery cells are arranged side by side in the width direction of the vehicle.

In some embodiments, a sealing plate assembly is arranged on the underbody, and the upper surface of the battery pack is hermetically connected to the sealing plate assembly.

In some embodiments, the sealing plate assembly is an annular sealing plate; and the vehicle includes at least one sealing member. The at least one sealing member is arranged between the sealing plate and the battery pack.

In some embodiments, the sealing plate includes a first plane portion, and the battery pack includes a second plane portion. The first plane portion is opposite to the second plane portion, and the at least one sealing member is arranged between the first plane portion and the second plane portion. The sealing plate includes a left sealing plate section and a right sealing plate section. A left end of the left sealing plate section is provided with a left bent edge, and the left sealing plate section is connected to the left rocker rail through the left bent edge. A right end of the right sealing plate section is provided with a right bent edge, and the right sealing plate section is connected to the right rocker rail through the right bent edge. The sealing plate further includes a front sealing plate section and a rear sealing plate section. The front sealing plate section is connected to a front longitudinal beam, and the rear sealing plate section is connected to a middle cross beam.

In some embodiments, a seat cross beam extending in the width direction is arranged on the underbody. A battery pack reinforcing beam extending in the width direction is arranged on the battery pack. The battery pack reinforcing beam is connected to the seat cross beam.

Additional aspects and advantages of the present disclosure are partially provided in the following description, and partially become apparent in the following description or understood through the practice of the present disclosure.

### BRIEF DESCRIPTION OF THE DRAWINGS

The foregoing and/or additional aspects and advantages of the present disclosure become apparent and comprehensible in description for embodiments made with reference to the following accompanying drawings.
FIG. 1 is a top view of a structure of a vehicle body according to an embodiment of the present disclosure;
FIG. 2 is a right view of a structure of a front portion of a vehicle body according to an embodiment of the present disclosure;
FIG. 3 is a schematic diagram of a partial structure of a vehicle body according to an embodiment of the present disclosure;
FIG. 4 is a schematic diagram of a structure of a front portion of a vehicle body according to an embodiment of the present disclosure, where a bottom surface of a front cross beam is shown in the figure;
FIG. 5 is a bottom view of a structure of a front portion of a vehicle body according to an embodiment of the present disclosure;
FIG. 6 is a right view of a structure of a rear portion of a vehicle body according to an embodiment of the present disclosure;
FIG. 7 is a schematic diagram of a structure of a rear portion of a vehicle body according to an embodiment of the present disclosure;
FIG. 8 is a cross-sectional view along a line A-A in FIG. 7;
FIG. 9 is a cross-sectional view of a partial structure of a vehicle body according to an embodiment of the present disclosure;
FIG. 10 is a cross-sectional view of a partial structure of a vehicle body according to an embodiment of the present disclosure;
FIG. 11 is an exploded view of a battery pack according to an embodiment of the present disclosure;
FIG. 12 is an exploded view of a partial vehicle body according to an embodiment of the present disclosure;
FIG. 13 is a schematic structural diagram of a sealing plate assembly according to an embodiment of the present disclosure;
FIG. 14 is a cross-sectional view of a right sealing plate section according to an embodiment of the present disclosure;
FIG. 15 is a cross-sectional view of a front sealing plate section according to an embodiment of the present disclosure;
FIG. 16 is a cross-sectional view of a battery pack according to an embodiment of the present disclosure;
FIG. 17 is a schematic structural diagram of a sealing plate and a seat cross beam according to an embodiment of the present disclosure; and
FIG. 18 is a schematic diagram of a structure of a rear portion of a vehicle body according to an embodiment of the present disclosure.

In the drawings:
vehicle 100; underbody 1; battery pack 2; front end surface 21; upper housing 2011 of the battery pack; left extension portion 20111; right extension portion 20111'; lower housing 2012 of the battery pack; accommodating space 2013; second plane portion 2014; battery pack reinforcing beam 2015; battery cell 202; structural adhesive 203; thermal adhesive 204; front subframe 3; rear end surface 31; central channel 4; front longitudinal beam 5; upper-side force transmission structure 5A; lower-side force transmission structure 5B; left-front longitudinal beam 501; right-front longitudinal beam 501'; first connecting section 502; second connecting section 503; third connecting section 504; A-pillar 6; front cross beam 7; rear subframe 8; rear longitudinal beam 9; left rear longitudinal beam 901; right rear longitudinal beam 901'; battery pack mounting beam 10; middle cross beam 11; rear-seat front cross beam 12; seat cross beam 13; bottom cross beam 14; subframe mounting base 15; front-seat front cross beam 16; left rocker rail 18; right rocker rail 18'; left sill housing 1801; left housing 18011 of the left sill; right housing 18011' of the left sill; upper right bent edge 18012; lower right bent edge 18013; upper left bent edge 18012'; lower left bent edge 18013'; left sill reinforcing beam 1802; cavity 18021; connecting bolt 19; sealing plate assembly 20; sealing plate 2001; first plane portion 2001a; left sealing plate section 2001b; right sealing plate section 2001b'; left bent edge 2001c; right bent edge 2001c'; front sealing plate section 2001d; front bent edge 2001e; rear sealing plate section 2001f; and sealing member 2002.

### DETAILED DESCRIPTION

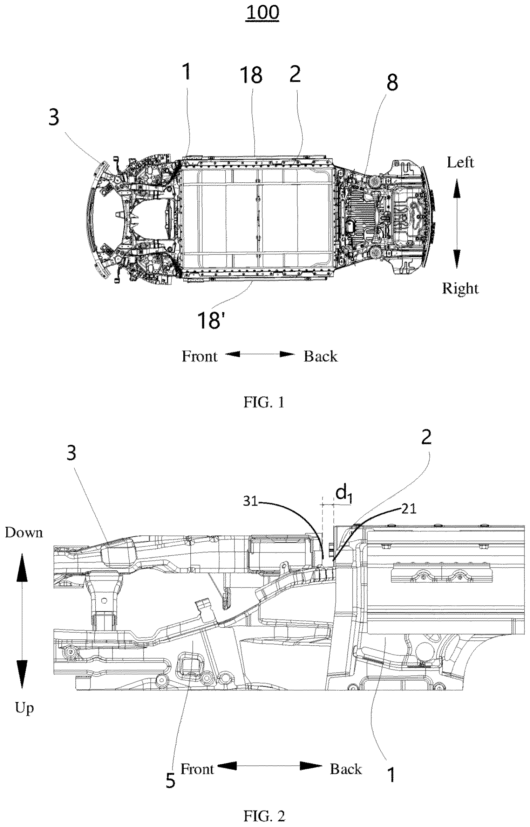

Embodiments of the present disclosure are described in detail below, and the embodiments described with reference to accompanying drawings are exemplary. A vehicle 100 according to an embodiment of the present disclosure is described with reference to FIG. 1 to FIG. 18. The vehicle 100 includes an underbody 1, a front subframe 3, and a battery pack 2. An X direction is a length direction of the vehicle 100, namely, a front-rear direction. A Y direction is a width direction of the vehicle 100, namely, a left-right direction. A Z direction is a height direction of the vehicle 100, namely, an up-down direction.

Specifically, as shown in FIG. 1 and FIG. 2, the front subframe 3 is connected to the underbody 1, and the battery pack 2 is connected to the underbody 1 and arranged on a lower side of the underbody 1. A rear end surface 31 of the front subframe 3 forms a limiting surface for forward extension of the battery pack 2. In other words, the battery pack 2 may extend to the rear end surface 31 of the front subframe 3. Through this arrangement, a dimension of the battery pack 2 in the X direction can be increased, and space utilization is increased. In addition, because the battery pack 2 extends to the front subframe 3, when a front collision occurs on the vehicle 100, the battery pack 2 can also serve as a force transmission structure for force transmission in addition to force transmission of a front longitudinal beam 5. The rear end surface 31 of the front subframe 3 forms the limiting surface for forward extension of the battery pack 2, so that when the vehicle 100 normally travels, the rear end surface 31 of the front subframe 2 is spaced apart from a front end surface 21 of the battery pack 2. If a collision occurs at the front of the vehicle 100, the front subframe 2 receives a force and moves backward to contact with the front end surface 21 of the battery pack 2, causing the battery pack 2 to participate in the force transmission. Therefore, the battery pack 2 can resist and distribute the force, to improve safety performance of the vehicle 100.

In the related art, a floor of a vehicle body is generally of a metal plate structure, and is an important component for bearing and sealing of a passenger compartment. An upper housing of a battery pack is generally made of aluminum. The battery pack is fixedly mounted below the floor of a vehicle body. The floor of the vehicle body and the battery pack are designed individually as two different components. In this case, an assembly gap needs to be reserved between the floor of the vehicle body and the battery pack in the Z direction, leading to low space utilization and a relatively high height of the whole vehicle.

In the vehicle 100 in the present disclosure, the arrangement of the floor of the vehicle body in the related art may be omitted, and at least a part of an upper surface of the battery pack 2 is used to form the floor of the vehicle body. For example, the floor of the vehicle body may be a front floor of the vehicle body, increasing the space utilization and passenger space of the vehicle 100, lowering the height of the whole vehicle, and improving mobility performance of the vehicle 100. In addition, a structure of the vehicle 100 is simplified, and assembly efficiency is improved.

In the vehicle 100 in this embodiment of the present disclosure, the rear end surface 31 of the front subframe 3 forms the limiting surface for forward extension of the battery pack 2, so that a dimension of the battery pack 2 in the front-rear direction can be increased, the space utilization of the vehicle 100 can be increased, and the battery pack 2 can serve as the force transmission structure for force transmission, to improve the safety performance of the vehicle 100. The at least a part of the upper surface of the battery pack 2 forms the floor of the vehicle body, so that a height of the whole vehicle can be lowered, and the space utilization and the passenger space of the vehicle 100 can be increased.

In some embodiments, as shown in FIG. 2, a minimum distance between the front end surface 21 of the battery pack 2 and the rear end surface 31 of the front subframe 3 is d₁, where d₁ satisfies: 10 mm ≤ d₁ ≤ 100 mm. For example, d₁ = 50 mm. In this way, an excessively large distance between the front end surface 21 of the battery pack 2 and a rear surface of the front subframe 3 can be prevented, so that space for extension of the battery pack 2 in the X direction is increased, thereby enlarging space for accommodating the battery pack 2; and it is convenient for the front subframe 3 to come into contact with the battery pack 2 for force transmission. In addition, when the battery pack 2 is mounted, the rear end surface 31 of the front subframe 3 is not directly connected to and is spaced apart from the battery pack 2, so that the battery pack 2 can be conveniently mounted, an assembly speed of the vehicle 100 is increased, and interference between the front end surface 21 of the battery pack 2 and the rear end surface 31 of the front subframe 3 when being mounted or when the vehicle 100 travels is avoided.

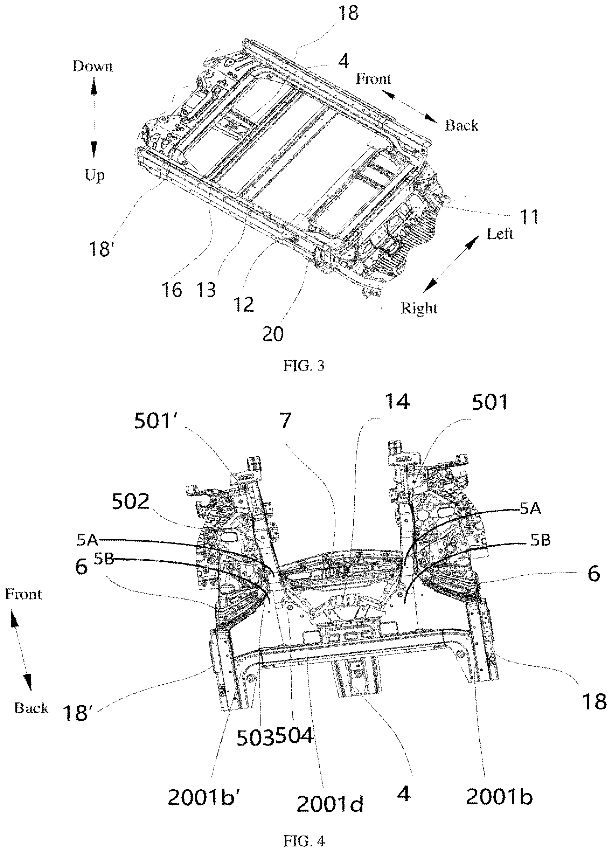

In some embodiments, as shown in FIG. 1 and FIG. 3, the underbody 1 further includes a left rocker rail 18 and a right rocker rail 18' oppositely arranged in the width direction of the vehicle body. The battery pack 2 is connected to the left rocker rail 18 and the right rocker rail 18' to cause the left rocker rail 18 and the right rocker rail 18' to form a battery pack mounting beam. In the related art, the battery pack mounting beam is used for mounting the battery pack, and two battery pack mounting beams are provided, and are respectively arranged between the battery pack and the left rocker rail and between the battery pack and the right rocker rail in the Y direction. With the battery pack mounting beams arranged in this way, placement space for the battery pack in the width direction of the vehicle is small, and it is not conducive to arrangement of a large size battery pack. In addition, when a side collision occurs on the vehicle, the battery pack mounting beams cannot well combine force transmissions of the battery pack, the left rocker rail, and the right rocker rail.

However, in the present disclosure, the battery pack 2 extends toward two sides in the Y direction and is directly connected to the left rocker rail 18 and the right rocker rail 18'. Space for accommodating the battery pack 2 between a left side surface of the right rocker rail 18' and a right side surface of the left rocker rail 18 increases, facilitating a design of a large dimension of the battery pack 2 in the left-right direction. Through this arrangement, the dimension of the battery pack 2 in the Y direction can be increased, so that an electrical capacity of the battery pack 2 is increased, and endurance of the vehicle 100 is improved. In addition, the battery pack 2 can participate in force transmission, to improve the safety performance of the vehicle 100. During a side collision of the vehicle 100, when the left rocker rail 18 and the right rocker rail 18' receive a force, the battery pack 2 participates in collision force transmission, to improve the safety performance of the vehicle 100.

In some embodiments, as shown in FIG. 2, the underbody 1 includes a left rocker rail 18 and a right rocker rail 18' oppositely arranged in the width direction of the vehicle body. The front end surface 21 of the battery pack 2 extends beyond a front end surface of the left rocker rail 18 and a front end surface of the right rocker rail 18' in the length direction of the vehicle 100. In this way, a dimension of the battery pack 2 in the X direction is relatively large, and can facilitate the force transmission with the front subframe 3. Certainly, in some other embodiments, the front end surface 21 of the battery pack 2 may alternatively be flush with the front end surface of the left rocker rail 18 and the front end surface of the right rocker rail 18' in the length direction of the vehicle 100, which is not limited herein.

In some embodiments, as shown in FIG. 2 and FIG. 4, the underbody 1 includes a front cross beam 7, and a left rocker rail 18 and a right rocker rail 18' oppositely arranged in the width direction of the vehicle body. An extending length of the front cross beam 7 in the width direction of the vehicle body is greater than a distance from an inner surface of the left rocker rail 18 to an inner surface of the right rocker rail 18'. The "inner surface of the left rocker rail 18" is a surface of a right side of the left rocker rail 18, and the "inner surface of the right rocker rail 18‴ is a surface of a left side of the right rocker rail 18'. Projections of the front end surface of the left rocker rail 18 and the front end surface of the right rocker rail 18' in the width direction overlap a projection of the front cross beam 7 in the width direction. That is, a front end surface of a left front rocker rail 18 and a front end surface of a right front rocker rail 18' may extend to the front cross beam 7 in the X direction.

Therefore, the left front rocker rail 18 and the right front rocker rail 18' may participate in the force transmission when a front collision occurs on the vehicle 100, to improve the safety performance of the vehicle 100. In addition, the left front rocker rail 18 and the right front rocker rail 18' may be respectively arranged on a left side and a right side of the battery pack 2 to protect the battery pack 2. In addition, the left front rocker rail 18, the battery pack 2, and the right front rocker rail 18' may participate in the force transmission when the side collision occurs on the vehicle 100, to improve the safety performance.

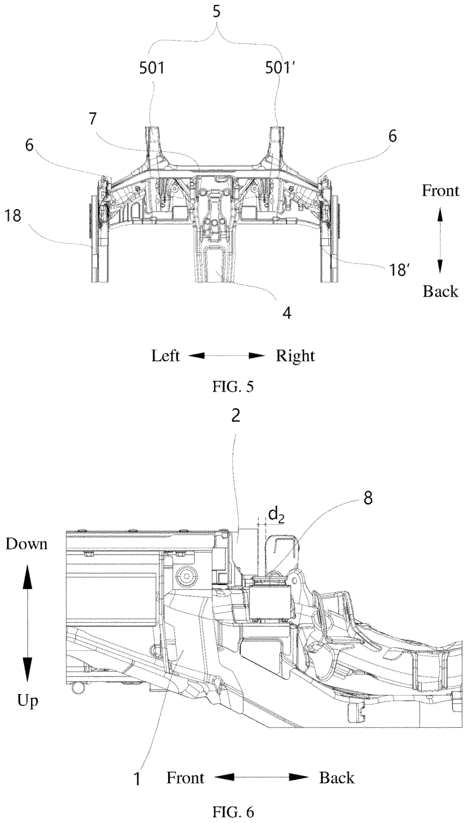

In some other embodiments, as shown in FIG. 4 and FIG. 5, the underbody 1 further includes a front cross beam 7 and oppositely arranged A-pillars 6. Two ends of the front cross beam 7 are connected to the A-pillars 6. Therefore, when a front collision occurs on the vehicle 100, a force transmitted to the front cross beam 7 can be transmitted to the A-pillars 6 through the left and right ends of the front cross beam 7, thereby improving a force-bearing capability of a front end of the vehicle 100 and improving the safety of the vehicle 100. In addition, the two A-pillars 6 are respectively arranged on a left side and a right side of the underbody 1, so that a collision force received by the vehicle 100 when a collision occurs on a left or right side of the vehicle 100 can be relieved, a force-bearing capability of the underbody 1 can be improved, and safety of the vehicle 100 is improved.

In some embodiments, as shown in FIG. 2, FIG. 4, and FIG. 5, the underbody 1 further includes a front longitudinal beam 5. The front longitudinal beam 5 is connected to the front cross beam 7, to transmit the front collision force to the front cross beam 7 through the front longitudinal beam 5. For example, the front longitudinal beam 5 may include a left-front longitudinal beam 501 and a right-front longitudinal beam 501'. The left-front longitudinal beam 501 and the right-front longitudinal beam 501' may be arranged at two ends of a front side of the front cross beam 7, and are connected to the front cross beam 7. In this way, when a collision occurs on the front side of the vehicle 100, a force transmitted to the front longitudinal beam 5 may be transmitted to the front cross beam 7 through an end of the front longitudinal beam 5 connected to the front cross beam 7, and the front collision force is transmitted toward a width direction of a vehicle cross beam through the cross beam 7. In this way, the front collision force received by the vehicle 100 when a collision occurs on the front side is relieved, structural stability of the vehicle 100 can be enhanced, a force-bearing capability of the front end of the vehicle 100 can be improved, and the safety performance of the vehicle 100 is improved.

In some embodiments, referring to FIG. 2 and FIG. 4, a rear side of the front longitudinal beam 5 includes an upper-side force transmission structure 5A and a lower-side force transmission structure 5B. A rear end of the upper-side force transmission structure 5A is connected to the front cross beam 7, and a rear end bottom surface of the lower-side force transmission structure 5B is spaced apart from the battery pack 2 in a vertical direction to form a sealed gap. The "sealed gap" means that the upper surface of the battery pack 2 hermetically fits with and forms a gap with a bottom surface of the underbody 1.

The rear end of the upper-side force transmission structure 5A of the front longitudinal beam 5 is connected (for example, lap-connected) to the front cross beam 7. When a front collision occurs on the vehicle 100, a part of the collision force transmitted to the front longitudinal beam 5 may be transmitted to the front cross beam 7 through the connection between the rear end of the upper-side force transmission structure 5A of the front longitudinal beam 5 and the front cross beam 7, and the front collision force is transmitted toward two sides of the vehicle 100 in the width direction through the front cross beam 7; and another part of the front collision force transmitted to the front longitudinal beam 5 may be transmitted backward through the rear end of the lower-side force transmission structure 5B of the front longitudinal beam 5, so that the front collision force on the front side of the vehicle 100 during collision is relieved, the structural stability of the vehicle 100 can be enhanced, and the force-bearing capability of the front end of the vehicle 100 is improved, thereby improving the safety of the vehicle 100. In addition, a rear end bottom surface of the lower-side force transmission structure 5B of the front longitudinal beam 5 is parallel to a top surface of the battery pack 2, so that a sealing member can be conveniently arranged between the rear end bottom surface of the lower-side force transmission structure 5B and the battery pack 2.

As shown in FIG. 4, a rear end bottom surface of the front longitudinal beam 5 is arranged parallel to the top surface of the battery pack 2, and is spaced apart from the top surface of the battery pack 2 in the vertical direction to form a sealed gap. A sealed structure may be arranged between a lower side of the front longitudinal beam 5 and the top surface of the battery pack 2. In this way, the rear end bottom surface of the front longitudinal beam 5 does not interfere with the top surface of the battery pack 2, to prevent the rear end bottom surface of the front longitudinal beam 5 from hindering mounting of the battery pack 2. In addition, a mounting position of the battery pack 2 can be raised, so that a chassis height of the vehicle 100 is raised, and the mobility of the vehicle 100 is improved, thereby lowering the height of the whole vehicle, and increasing space inside the vehicle. Moreover, force transmission of the front longitudinal beam 5 toward the two sides in the width direction is facilitated, thereby facilitating transmission and distribution of the force, and improving the safety performance of the vehicle 100.

In some specific embodiments, as shown in FIG. 2 and FIG. 4, the underbody 1 further includes a front longitudinal beam 5. The rear end bottom surface of the front longitudinal beam 5 is spaced apart from the top surface of the battery pack 2 in the vertical direction to form a sealed gap. Space between the rear end bottom surface of the front longitudinal beam 5 and the top surface of the battery pack 2 is suitable for arrangement of a sealed structure. Through this arrangement, the rear end bottom surface of the front longitudinal beam 5 does not interfere with the top surface of the battery pack 2, to prevent the rear end bottom surface of the front longitudinal beam 5 from hindering the mounting of the battery pack 2. In addition, the mounting position of the battery pack 2 can be raised, so that the chassis height of the vehicle 100 is raised, and the mobility of the vehicle 100 is improved. Moreover, force transmission is facilitated. In addition, the rear end bottom surface of the front longitudinal beam 5 is parallel to the top surface of the battery pack 2, so that a sealing member can be conveniently arranged between the rear end bottom surface of the front longitudinal beam 5 and the battery pack 2.

In some embodiments, referring to FIG. 3 and FIG. 4, the lower-side force transmission structure 5B is connected to the left rocker rail 18, the right rocker rail 18, and a central channel 4. The front longitudinal beam 5 may include a left-front longitudinal beam 501 and a right-front longitudinal beam 501'. A lower end of the left-front longitudinal beam 501 is connected to the left rocker rail 18, a lower end of the right-front longitudinal beam 501' is connected to a left side of the right rocker rail 18', and at least a part of the left-front longitudinal beam 501 and the right-front longitudinal beam 501' may be connected to the central channel 4. Through this arrangement, when the front collision force is transmitted to the left-front longitudinal beam 501 and the right-front longitudinal beam 501', a part of the front collision force may be transmitted to the left rocker rail 18 and the right rocker rail 18' respectively through the left-front longitudinal beam 501 and the right-front longitudinal beam 501', and transmitted toward the length direction of the vehicle 100 through the left rocker rail 18 and the right rocker rail 18'. Another part of the front collision force may be transmitted toward the central channel 4 through lower ends of the left-front longitudinal beam 501 and the right-front longitudinal beam 501'. At least a part of the side collision force may be transmitted to the battery pack 2 through the left rocker rail 18 and the right-front longitudinal beam 501' when a collision occurs on the left side or the right side of the vehicle 100. Through this arrangement, forces received by the vehicle 100 during collision on the left side, the right side, and the front side can be relieved, thereby improving the force-bearing capability of the vehicle 100, and improving the safety of the vehicle 100.

Further, as shown in FIG. 3, the underbody 1 may include a front-seat front cross beam 16. A left end and a right end of the front-seat front cross beam 16 are respectively connected to a right side of the left rocker rail 18 and a left side of the right rocker rail 18'. A front side of the front-seat front cross beam 16 may be connected to a rear end of the central channel 4. A part of the front collision force, when transmitted to the rear end of the central channel 4, may be transmitted toward the width direction of the vehicle 100 through the front-seat front cross beam 16, so that the force received by the vehicle 100 when a collision occurs on the front side of the vehicle 100 is relieved, thereby improving the force-bearing capability of the vehicle 100, and improving the safety of the vehicle 100.

In some embodiments, referring to FIG. 4 and FIG. 5, the lower-side force transmission structure 5B is a Y-shaped structure. Both front longitudinal beams 501 and 501' include: a first connecting section 502, a second connecting section 503, and a third connecting section 504. A rear end of the first connecting section 502 is connected to both a front end of the second connecting section 503 and a front end of the third connecting section 504. In a direction from front to rear, the front end of the second connecting section 503 is connected to the front end of the third connecting section 504, and a rear end of the second connecting section 503 gradually extends away from a rear end of the third connecting section 504. That is, the first connecting section 502, the second connecting section 503, and the third connecting section 504 can jointly form a Y-shaped structure.

Referring to FIG. 4, the second connecting section 503 is located on an outer side of the third connecting section 504, the second connecting section 503 is connected to the A-pillar 6, and a bottom surface of the second connecting section 503 and a bottom surface of the third connecting section 504 are located on a same plane, to facilitate the transmission and the distribution of the forces on the left side and the right side. In addition, the bottom surface of the second connecting section 503 and the bottom surface of the third connecting section 504 are adapted to be parallel to the battery pack 2, so that the battery pack 2 can extend to the bottom surface of the second connecting section 503 and the bottom surface of the third connecting section 504. The bottom surface of the second connecting section 503 may have at least one mounting point (not shown). The front end surface 21 of the battery pack 2 may extend to the mounting point in the second connecting section 503 and be fixedly connected to the front longitudinal beam 5 through the mounting point, so that the battery pack 2 can participate in the force transmission, thereby relieving the force received by the vehicle 100 when a collision occurs on the front side of the vehicle 100, improving the force-bearing capability of the vehicle 100, and ensuring that the safety of the vehicle 100 is improved.

A left end of the lower-side force transmission structure 5B of the left-front longitudinal beam 501 may be connected to the A-pillar 6 on the left side of the underbody 1. A right end of the lower-side force transmission structure 5B of the right-front longitudinal beam 501' may be connected to the A-pillar 6 on the right side of the underbody 1. With such arrangement of the front longitudinal beam 5, when a collision occurs on the front side of the vehicle 100, the front collision force may be transmitted to the front longitudinal beam 5 and then transmitted backward through the Y-shaped structure. In this way, a stress area of a rear end of the front longitudinal beam 5 is gradually enlarged, concentrated application of the front collision force is avoided, impact of the front collision force on the vehicle 100 is relieved, the force-bearing capability of the vehicle 100 is improved, and the safety of the vehicle 100 is improved. In addition, the lower-side force transmission structure 5B of the front longitudinal beam 5 is connected to the A-pillar 6 arranged on the underbody 1, so that the front collision force is transmitted to the A-pillar 6, the force received by the vehicle 100 when a collision occurs on the front side of the vehicle 100 is relieved, the force-bearing capability of the vehicle 100 is improved, and it is ensured that the safety of the vehicle 100 is improved.

In some embodiments, as shown in FIG. 4 and FIG. 5, the front longitudinal beam 5 includes a left-front longitudinal beam 501 and a right-front longitudinal beam 501' spaced apart in the left-right direction of the vehicle 100. A bottom cross beam 14 is connected between the left-front longitudinal beam 501 and the right-front longitudinal beam 501'. A bottom surface of the bottom cross beam 14 is spaced apart from the top surface of the battery pack 2 in the vertical direction to form a gap, to reserve a sealed space, and prevent the bottom cross beam 14 from blocking the battery pack 2 from extending forward, so that the electrical capacity of the battery pack is increased. The bottom cross beam 14 may be arranged on a rear side of the left-front longitudinal beam 501 and the right-front longitudinal beam 501', and two ends of the bottom cross beam 14 may be respectively connected to the left-front longitudinal beam 501 and the right-front longitudinal beam 501'. Through such arrangement of the left-front longitudinal beam 501 and the right-front longitudinal beam 501', when a collision occurs on the front end of the vehicle 100, the front collision force transmitted to rear ends of the left-front longitudinal beam 501 and the right-front longitudinal beam 501' may be transmitted toward the width direction of the vehicle 100 through guiding of the bottom cross beam 14, thereby relieving and distributing the front collision force, improving the force-bearing capability of the front end of the vehicle 100, and improving the safety of the vehicle 100.

The bottom surface of the bottom cross beam 14 is spaced apart from the top surface of the battery pack 2 in the vertical direction to form the gap. Through this arrangement, the bottom surface of the bottom cross beam 14 does not interfere with the top surface of the battery pack 2, so that the front end of the battery pack 2 can continue to extend forward, the mounting space for the battery pack 2 in the X direction can be enlarged, and hindering of the mounting of the battery pack 2 by the bottom surface of the bottom cross beam 14 is avoided, thereby improving the assembly speed of the vehicle 100, facilitating automated production of the vehicle 100, raising the chassis height of the vehicle 100, and improving the mobility of the vehicle 100. In addition, the rear end bottom surface of the front longitudinal beam 5 is parallel to the top surface of the battery pack 2, so that a sealing member can be conveniently arranged between the rear end bottom surface of the front longitudinal beam 5 and the battery pack 2.

In some embodiments, projections of a front end surface of the left rocker rail 18 and a front end surface of the right rocker rail 18' in the width direction overlap a projection of the bottom cross beam 14 in the width direction. That is, the bottom cross beam 14 protrudes from the front end surface of the left rocker rail 18 and the front end surface of the right rocker rail 18'. Therefore, the bottom cross beam 14 extends forward, so that the mounting space for the battery pack 2 in the X direction of the vehicle 100 can be enlarged.

In some embodiments, as shown in FIG. 1 and FIG. 6, the vehicle 100 further includes a rear subframe 8. The rear subframe 8 is connected to the underbody 1. A front end surface of the rear subframe 8 forms a limiting surface for backward extension of the battery pack 2.

In other words, the battery pack 2 may extend to the front end surface of the rear subframe 8. Through this arrangement, the dimension of the battery pack 2 in the X direction can be increased, and the space utilization is increased. In addition, because the battery pack 2 extends to the rear subframe 8, when a rear collision occurs, the battery pack 2 can also serve as a force transmission structure for force transmission in addition to force transmission of the front longitudinal beam 5. The front end surface of the rear subframe 8 forms the limiting surface for backward extension of the battery pack 2. When the vehicle 100 normally travels, the front end surface of the rear subframe 8 is spaced apart from the rear end surface of the battery pack 2. If a collision occurs at the rear of the vehicle 100, the rear subframe 8 receives a force and moves forward to contact with the rear end surface of the battery pack 2, causing the battery pack 2 to participate in the force transmission. Therefore, the battery pack 2 can resist and distribute the force, to improve the safety performance of the vehicle 100.

Therefore, the dimension of the battery pack 2 in the X direction can be increased, the space utilization can be increased, and the endurance of the vehicle 100 is improved. In addition, the battery pack 2 can resist and distribute the force, to improve the safety performance of the vehicle 100.

For example, as shown in FIG. 6, a minimum distance between a front surface of the rear subframe 8 and a rear surface of the battery pack 2 is d₂, where d₂ satisfies: 15 mm ≤ d₂ ≤ 30 mm. For example, d₂ = 20 mm. In this way, an excessively large distance between the rear end surface of the battery pack 2 and a front surface of the rear subframe 8 can be prevented, to ensure that sufficient arrangement space in the X direction is provided for the battery pack 2; and it is convenient for the rear subframe 8 to come into contact with the battery pack 2 for force transmission. In addition, when the battery pack 2 is mounted, the front surface of the rear subframe 8 is not directly connected to and is spaced apart from the battery pack 2, so that the battery pack 2 can be conveniently mounted, the assembly speed of the vehicle 100 is increased, and interference between the rear end surface of the battery pack 2 and the front surface of the rear subframe 8 when being mounted or when the vehicle 100 travels is avoided.

In some embodiments, referring to FIG. 4, FIG. 7, and FIG. 8, the underbody 1 further includes a middle cross beam 11 and two rear longitudinal beams 9 spaced apart. The middle cross beam 11 extends in the width direction of the vehicle 100, and is connected to the rear longitudinal beams 9 and the left rocker rail 18 and the right rocker rail 18'. The middle cross beam 11 is arranged on a rear side of the underbody 1. Two ends of the middle cross beam 11 extending in the width direction of the vehicle 100 are respectively connected to the left rocker rail 18 and the right rocker rail 18', and at least a part of a rear side of the middle cross beam 11 may be located below a front end of the rear longitudinal beam 9. Therefore, the left rocker rail 18 and the right rocker rail 18' may extend to the middle cross beam 11. The left rocker rail 18 and the right rocker rail 18' can participate in the force transmission when a rear collision occurs on the vehicle 100, to improve the safety performance of the vehicle 100. Moreover, the left rocker rail 18 and the right rocker rail 18' may be respectively arranged on the left side and the right side of the battery pack 2 to protect the battery pack 2. In addition, the left rocker rail 18, the battery pack 2, and the right rocker rail 18' may participate in the force transmission when a side collision occurs on the vehicle 100, to improve the safety performance.

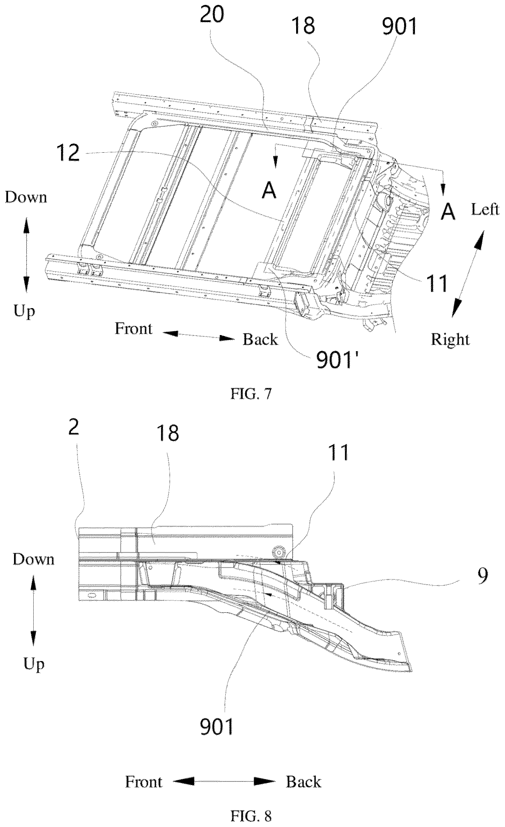

In some embodiments, as shown in FIG. 7, the middle cross beam 11 forms the battery pack mounting beam. In other words, the rear end of the battery pack 2 may be mounted on the middle cross beam 11. A lower surface of the middle cross beam 11 is spaced apart from the top surface of the battery pack 2 in the vertical direction to form a sealed gap. Space between the lower surface of the middle cross beam 11 and the top surface of the battery pack 2 is suitable for arrangement of a sealed structure. Through this arrangement, the lower surface of the middle cross beam 11 does not interfere with the top surface of the battery pack 2, to prevent the lower surface of the middle cross beam 11 from hindering the mounting of the battery pack 2. In addition, the dimension of the battery pack 2 in the X direction can be increased, so that the chassis height of the vehicle 100 is raised, and the mobility of the vehicle 100 is improved. In addition, the lower surface of the middle cross beam 11 is parallel to the top surface of the battery pack 2, so that a sealing member can be conveniently arranged between the lower surface of the middle cross beam 11 and the battery pack 2.

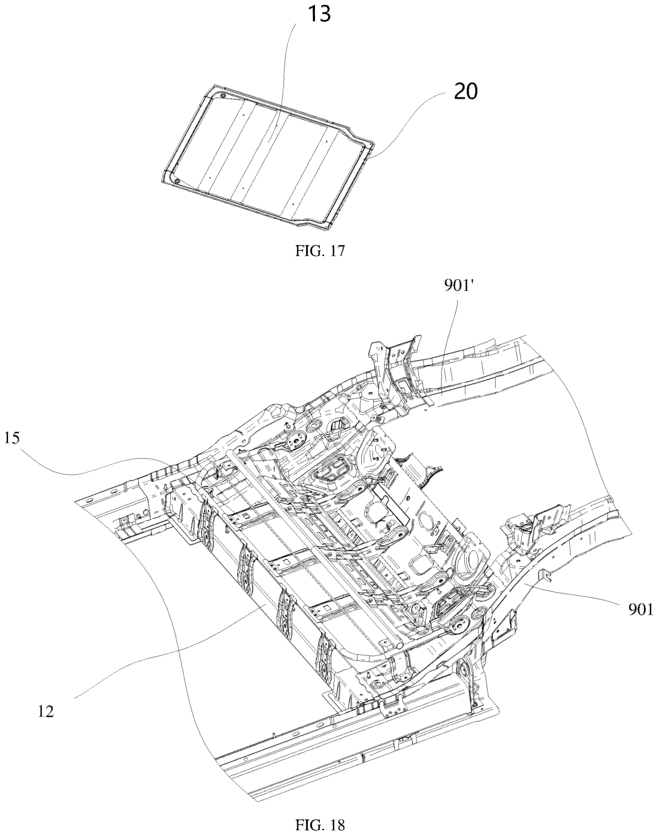

In some embodiments, as shown in FIG. 7 and FIG. 18, subframe mounting bases 15 are arranged at intervals on the middle cross beam 11. The subframe mounting bases 15 are arranged on a rear side of a rear end surface of the rocker rails (namely, the left rocker rail 18 and the right rocker rail 18') in the length direction of the vehicle 100. Therefore, the subframe mounting bases 15 may form a cage structure. The subframe mounting bases 15 at least surround a periphery in a left-right direction of a rear portion of the battery pack 2, to protect a side edge of the rear portion of the battery pack 2. For example, an upper surface of the rear portion of the battery pack 2 is spaced apart from the subframe mounting bases 15 in a height direction, so that other components can be accommodated at the spacing, thereby making proper use of space. It may be understood that the subframe mounting bases 15 are arranged on a rear side of the connection between the middle cross beam 11 and the battery pack 20. With the subframe mounting bases 15 arranged in this way, the collision force received by the subframe can be transmitted to the subframe mounting bases 15, then to the middle cross beam 11 and to the battery pack 20, so that an effective force transmission path can be formed, and a new force transmission path can be formed by using the battery pack 20 and the middle cross beam 11. By using the large-area characteristic of the battery pack 20, damage to the vehicle structure during the force transmission can be effectively reduced.

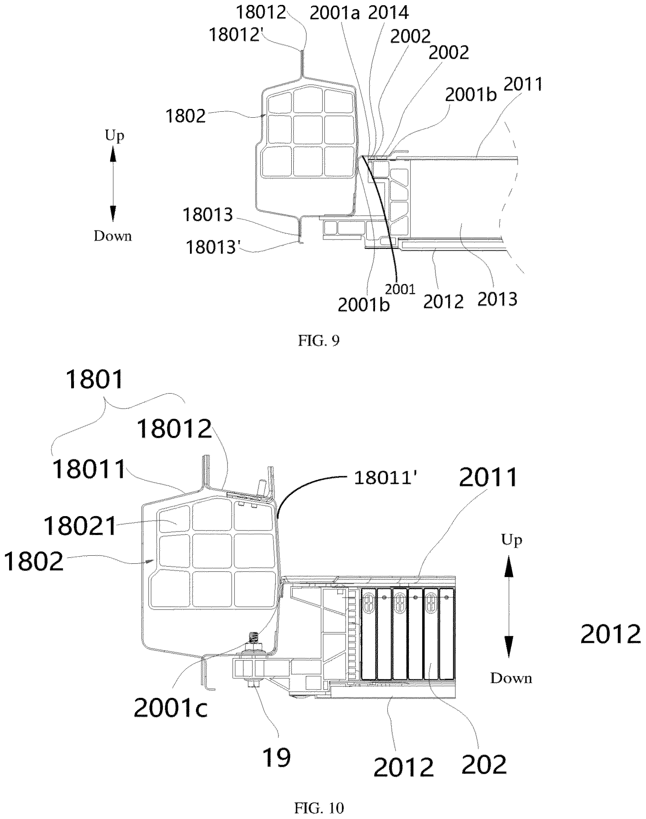

In some embodiments, referring to FIG. 9 and FIG. 10, the left rocker rail 18 includes a left sill housing 1801 and a left sill reinforcing beam 1802 arranged in the left sill housing 1801, and the right rocker rail 18' includes a right sill housing (not shown) and a right sill reinforcing beam (not shown) arranged in the right sill housing.

The left rocker rail 18 is used as an example for description below. The left rocker rail 18 is arranged on the left side of the underbody 1 and extends in the length direction of the vehicle 100. The left rocker rail 18 includes a left sill housing 1801 and a left sill reinforcing beam 1802 arranged in the left sill housing 1801. The left sill housing 1801 may include a left housing 18011 of the left sill and a right housing 18011' of the left sill. The left sill reinforcing beam 1802 may have at least one cavity 18021 running through the left sill reinforcing beam 1802 in the front-rear direction, and the left sill reinforcing beam 1802 is arranged in an accommodating cavity jointly formed by the left housing 18011 of the left sill and the right housing 18011' of the left sill. An upper surface of the left housing 18011 of the left sill is provided with an upper left bent edge 18012', a lower surface of the left housing 18011 of the left sill is provided with a lower left bent edge 18013', an upper surface of the right housing 18011' of the left sill is provided with an upper right bent edge 18012, and a lower surface of the right housing 18011' of the left sill is provided with a lower right bent edge 18013. The upper left bent edge 18012' and the upper right bent edge 18012 are fittingly arranged in the width direction, and the lower left bent edge 18013' and the lower right bent edge 18013 are fittingly arranged in the width direction, to improve structural stability of the left rocker rail 18, and improve a force-bearing capability of the left sill housing 1801.

The left sill reinforcing beam 1802 is arranged in the left sill housing 1801. At least a part of the left sill reinforcing beam 1802 may be connected to at least one of the left housing 18011 of the left sill and the right housing 18011' of the left sill. The left sill reinforcing beam 1802 arranged in this way can improve a force-bearing capability of the left rocker rail 18, so that when a collision occurs on the left side of the vehicle 100, the left sill reinforcing beam 1802 can protect the underbody 1, thereby improving the safety of the vehicle 100.

Multiple cavities 18021 may be provided. The multiple cavities 18021 run through the left sill reinforcing beam 1802 in the front-rear direction. A cross section of the multiple cavities 18021 in the front-rear direction may be in a grid shape. The left sill reinforcing beam 1802 arranged in this way can reduce the material consumption and weight of the left sill reinforcing beam 1802, so that a lightweight design of the vehicle 100 is easy to be achieved.

The rocker rails may achieve a "sandwich" side protection structure including an upper layer, a middle layer, and a lower layer. Specifically, the left rocker rail 18 is used as an example, after the left rocker rail 18 receives a force, the left rocker rail 18 may provide an upper-layer force transmission through the upper housing 2011 of the battery pack in an upper portion of the battery pack 2; the force is transmitted from the left sill reinforcing beam 1802 to the left extension portion 20111 and then to the battery cell 202, so that a middle-layer side force transmission structure is formed; and the force is transmitted from the left rocker rail 18 to the left extension portion 20111 and the battery cell 202 and then to a bottom plate of the battery pack 2, so that a lower-layer side force transmission structure is formed. Therefore, the "sandwich" side protection structure including an upper layer, a middle layer, and a lower layer is formed, and passengers in the vehicle can be better protected.

For example, as shown in FIG. 9, the left sill reinforcing beam 1802 and the right sill reinforcing beam are each made of an aluminum alloy profile. When the left sill reinforcing beam 1802 and the right sill reinforcing beam are configured to be made of aluminum alloy profiles, rigidity, torsional strength, and force-bearing capabilities of the left sill reinforcing beam 1802 and the right sill reinforcing beam can be ensured, weights of the left sill reinforcing beam 1802 and the right sill reinforcing beam are reduced, and a lightweight design of the vehicle 100 is easy to be achieved. Moreover, the left sill reinforcing beam 1802 and the right sill reinforcing beam well fit with the battery pack 2, thereby achieving a good force transmission effect.

In some embodiments, as shown in FIG. 9, FIG. 10, and FIG. 11, the battery pack 2 includes an upper housing 2011 of the battery pack, a lower housing 2012 of the battery pack, and at least one battery cell 202. The upper housing 2011 of the battery pack and the lower housing 2012 of the battery pack form an accommodating space 2013, and the at least one battery cell 202 is arranged in the accommodating space 2013. At least a part of an upper surface of the upper housing 2011 of the battery pack forms the floor of the vehicle body. Therefore, at least a part of the floor of the vehicle body in the related art can be omitted in the present disclosure.

In the battery pack 2 in the present disclosure, the arrangement of the floor of the vehicle body in the related art is omitted, and the at least a part of the upper surface of the battery pack 2 is used to form the floor of the vehicle body, so that the space utilization of the vehicle 100 is improved, the passenger space is enlarged, the height of the whole vehicle is lowered, and the mobility of the vehicle 100 is improved. In addition, the structure of the vehicle 100 can be simplified, and the assembly efficiency can be improved.

Two sides of the upper housing 2011 of the battery pack in the width direction may respectively have a left extension portion 20111 and a right extension portion 20111'. Multiple left connecting holes (not shown) may be provided at intervals on the left extension portion 20111 in the length direction of the vehicle 100, and multiple right connecting holes (not shown) may be provided at intervals on the right extension portion 20111' in the length direction of the vehicle 100. The left connecting holes and the right connecting holes may be in communication in an up-down direction. A connecting bolt 19 may be arranged in each of the left connecting holes and right connecting holes. The upper housing 2011 of the battery pack may be connected to the left rocker rail 18 and the right rocker rail 18' through the connecting bolts 19.

Connection between the left extension portion 20111 and the left rocker rail 18 is used as an example for description below. Left sill connecting holes (not shown) running through in the up-down direction may be provided at positions corresponding to the left connecting holes on the left sill housing 1801 of the left rocker rail 18. The connecting bolts 19 can run through the left sill connecting holes of the left sill housing 1801 and the left connecting holes of the left extension portion 20111, to improve the stability of connection between the left rocker rail 18 and the upper housing 2011 of the battery pack. In addition, the battery pack 2 may be used as a force-bearing component, so that when a collision occurs on the left side of the vehicle 100, the side collision force may be transmitted from the left rocker rail 18 to the battery pack 2, to relieve the force received by the vehicle 100 when a collision occurs on the left side of the vehicle 100, and prevent the vehicle 100 from greatly deforming due to the side collision force, so that the force-bearing capability of the vehicle 100 is improved, and the safety of the vehicle 100 is improved.

The accommodating space 2013 that can accommodate the at least one battery cell 202 is formed between the upper housing 2011 of the battery pack and the lower housing 2012 of the battery pack. The upper housing 2011 of the battery pack and the lower housing 2012 of the battery pack can jointly protect the battery cell 202, thereby increasing a quantity of the battery cells 202 accommodated in the battery pack 2, increasing a total electrical capacity of the battery pack 2, and improving the endurance of the vehicle 100.

The at least a part of the upper surface of the upper housing 2011 of the battery pack forms the floor of the vehicle body, so that the accommodating space 2013 of the battery pack 2 can extend upward, thereby enlarging the mounting space for the battery pack 2, increasing the capacity of the battery pack 2. Therefore, the electrical capacity of the battery pack 2 is improved, the endurance of the vehicle 100 is improved, material consumption is reduced, the total weight of the vehicle 100 is reduced, and a lightweight design of the vehicle 100 is easy to be achieved.

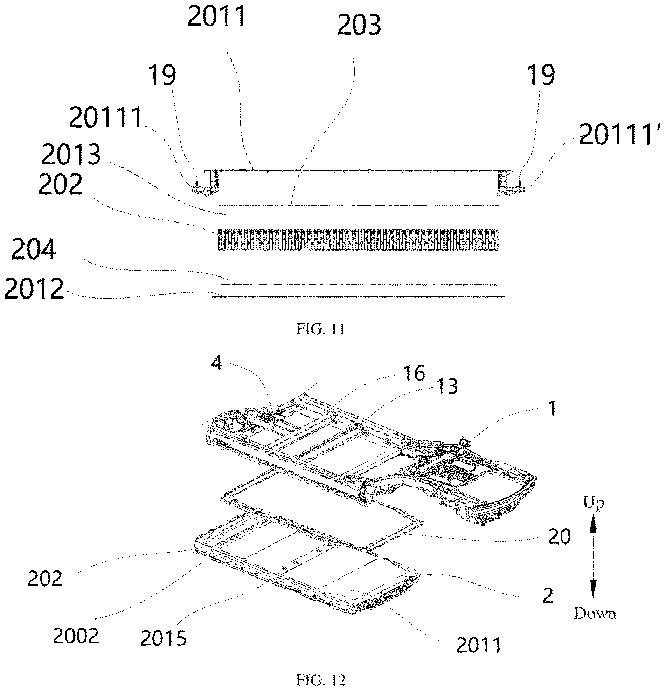

In some embodiments, as shown in FIG. 11, the battery cell 202 is fixedly connected to the upper housing 2011 of the battery pack. Therefore, space occupied by the battery pack 2 in the Z direction can be reduced, the space utilization in the Z direction is improved, and mounting reliability between the battery cell 202 and the upper housing 2011 of the battery pack is improved. As shown in FIG. 11 and FIG. 12, a top surface of the battery cell 202 is bonded with an upper cover through a structural adhesive 203. In this way, the space occupied by the battery pack 2 in the Z direction can be reduced, and a gap between the battery cell 202 and the upper housing 2011 of the battery pack can be reduced, to improve compactness between the battery cell 202 and the upper housing 2011 of the battery pack, thereby preventing a case in which the gap between the battery cell 202 and the upper housing 2011 of the battery pack is relatively large, and when the upper housing 2011 of the battery pack is used as the floor of the vehicle body, the battery cell 202 is subjected to a relatively large force, so that the battery cell 202 falls off the upper housing 2011 of the battery pack. In addition, the upper housing 2011 of the battery pack can provide force transmission, so that strength of the upper housing 2011 of the battery pack is improved, and modality of the upper housing 2011 of the battery pack is enhanced.

In some embodiments, as shown in FIG. 11, the lower housing 2012 of the battery pack is a cooling plate, and a bottom surface of the battery cell 202 is bonded with the lower housing 2012 of the battery pack through a thermal adhesive 204. The cooling plate of the battery pack 2, serving as the lower housing, has a cooling effect on the battery cell 202. The bottom surface of the battery cell 202 is bonded with the lower housing 2012 of the battery pack through the thermal adhesive 204. With the lower housing 2012 of the battery pack arranged in this way, when the battery cell 202 produces heat, the heat can be conducted from the bottom surface of the battery cell 202 to the lower housing 2012 of the battery cell through the thermal adhesive 204 for cooling, so that temperature in the battery pack 2 is reduced, and danger caused by over-temperature of the battery cell 202 in the battery pack 2 is avoided, thereby improving safety and reliability of the battery pack 2, and improving the safety of the vehicle 100. Moreover, an integration degree of the battery pack 2 is improved, and energy density of the battery pack 2 is improved.

Alternatively, because the battery cell 202 is connected to the upper housing 2011 of the battery pack, and the lower housing 2012 of the battery pack is not subjected to a force, the lower housing 2012 of the battery pack can be replaced with the cooling plate, so that the lower housing 2012 of the battery pack is not necessary, and the weight of the battery pack 2 is reduced. In addition, the cooling plate can further protect the battery pack 2, thereby improving the safety and the reliability of the battery pack 2, and improving the safety of the vehicle 100.

In some embodiments, as shown in FIG. 10, FIG. 11, and FIG. 16, the battery pack 2 may include at least one battery cell 202. A length direction of the battery cell 202 is the length direction of the vehicle 100. The at least one battery cell 202 is arranged in the accommodating space 2013 of the battery pack 2. With the length direction of the battery cell 202 being set as the length direction of the vehicle 100, a quantity of battery cells 202 arranged in the width direction can be increased, and the space utilization of the battery pack 2 can be increased. The quantity of battery cells 202 accommodated in the battery pack 2 is increased, so that the endurance of the vehicle 100 is improved.

As shown in FIG. 10 and FIG. 11, the battery pack 2 includes multiple battery cells 202. The multiple battery cells 202 are arranged side by side in the width direction of the vehicle 100. A main expansion surface of the battery cell 202 (namely, an outer surface with a largest area of the battery cell 202) is arranged facing the width direction of the vehicle 100, which is convenient for the battery cell 202 to participate in the force transmission during a side collision on the vehicle 100; and is convenient to improve the space utilization of the battery pack 2, and increases the quantity of battery cells 202 accommodated in the battery pack 2, so that the total electrical capacity of the battery pack 2 is improved, thereby improving the endurance of the vehicle 100. For example, the main expansion surface of the battery cell 202 closely fits with the upper housing 2011 of the battery pack. The battery cell 202 arranged in this way can enlarge a force transmission area, thereby reducing pressure, to improve the force transmission effect.

In some embodiments, as shown in FIG. 12, a sealing plate assembly 20 is arranged on the underbody 1, and the upper surface of the battery pack 2 is hermetically connected to the sealing plate assembly 20. Therefore, the sealing reliability between the battery pack 2 and the passenger compartment can be improved, thereby preventing impurities such as dust from entering the lower side of the underbody 1 from the upper surface of the battery pack 2. The sealing plate assembly 20 is arranged on the vehicle body, and a gap between the sealing plate assembly 20 and the battery pack 2 is a sealed gap. The sealing plate assembly can provide a flat plane to facilitate sealing with the battery pack 2. The sealing plate assembly 20 arranged in this way can conveniently seal the upper side of the battery pack 2, ensuring the sealing reliability and facilitating assembly of the vehicle.

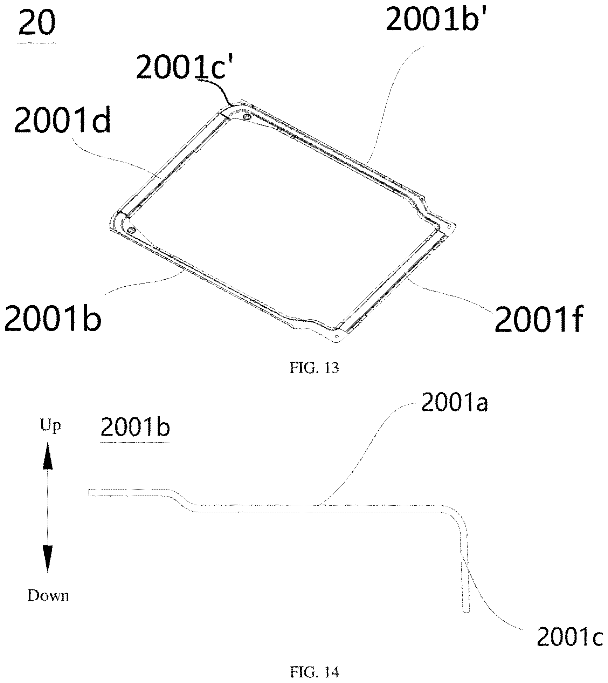

In some embodiments, referring to FIG. 9 and FIG. 13, the sealing plate assembly 20 includes an annular sealing plate 2001 and at least one sealing member 2002. The at least one sealing member 2002 is arranged between the sealing plate 2001 and the battery pack 2. The at least one sealing member 2002 may be configured to be in an annular shape, and two such sealing members may be provided. The two sealing members 2002 are sealed between the sealing plate 2001 and the battery pack 2. One of two adjacent sealing members 2002 is located at a periphery of the other sealing member 2002, and the two sealing members 2002 are spaced apart in an inner-outer direction. The at least one sealing member 2002 may be, for example, a sealing sponge, or a sealing rubber strip. The two sealing members 2002 deform after receiving stress, implementing the sealing reliability. A fitting degree of a single sealing member 2002 is improved, to improve a sealing effect of the sealing plate 2001, and block substances such as water and air inside and outside a rubber strip.

For example, the sealing plate 2001 may include multiple sub-sealing plates 2001 connected in sequence, and the multiple sub-sealing plates 2001 may be welded; or the sealing plate 2001 may be made by stamping a whole steel plate, thereby improving sealing performance of the sealing plate 2001 through integral forming.

As shown in FIG. 9, the sealing plate 2001 includes a first plane portion 2001a, and the battery pack 2 includes a second plane portion 2014. The first plane portion 2001a is opposite to the second plane portion 2014, and the at least one sealing member 2002 is arranged between the first plane portion 2001a and the second plane portion 2014. The first plane portion 2001a is arranged opposite to the second plane portion 2014, and the least one sealing member 2002 is fittingly arranged between the first plane portion 2001a and the second plane portion 2014, thereby further improving the sealing effect of the sealing plate 2001, improving sealability of the underbody 1, and improving passenger comfort.

Optionally, the at least one sealing member 2002 is a foam member. The foam member may be made of an ethylene vinyl acetate (EVA) or an expandable polyethylene (EPE) material. The foam member has characteristics such as light weight, deformability, good sound insulation, good heat insulation, and the like, which can improve heat insulation of the sealing plate 2001, and prevent upward transfer of the temperature after the battery pack 2 heats up, so that the safety and the reliability of the battery pack 2 are improved, and the safety of the vehicle 100 is improved. In addition, the foam member can improve the sound insulation of the vehicle 100, and block substances such as water and air, to improve the passenger comfort. The foam member may have a specific amount of sealing compression, to ensure the sealing effect. The foam member may be bonded with the battery pack 2.

In some embodiments, as shown in FIG. 9, FIG. 10, FIG. 14, and FIG. 15, a left rocker rail 18 is arranged on a left side of the underbody 1, and a right rocker rail 18' is arranged on a right side of the underbody 1. The sealing plate 2001 includes a left sealing plate section 2001b and a right sealing plate section 2001b'. The left sealing plate section 2001b includes a first plane portion 2001a. A left end of the left sealing plate section 2001b is provided with a left bent edge 2001c. The first plane portion 2001a of the left sealing plate section 2001b is connected to the left bent edge 2001c, and the left sealing plate section 2001b is connected to the left rocker rail 18 through the left bent edge 2001c. The right sealing plate section 2001b' includes a first plane portion 2001a. A right end of the right sealing plate section 2001b' is provided with a right bent edge 2001c'. The first plane portion 2001a of the right sealing plate section 2001b is connected to the right bent edge 2001c', and the right sealing plate section 2001b' is connected to the right rocker rail 18' through the right bent edge 2001c'. The left sealing plate section 2001b is connected to the left rocker rail 18 through the left bent edge 2001c, and the right sealing plate section 2001b' is connected to the right rocker rail 18' through the right bent edge 2001c'.

Connection between the left rocker rail 18 and the left sealing plate section 2001b is used as an example for description below. The left end of the left sealing plate section 2001b is provided with the left bent edge 2001c bending and extending downward. A left side surface of the left bent edge 2001c may be arranged opposite to the right side surface of the left rocker rail 18, and the left side surface of the left bent edge 2001c may be at least partially connected to the right side surface of the left rocker rail 18. Through such arrangement of the left sealing plate section 2001b, connection reliability between the sealing plate 2001 and the left rocker rail 18 is improved, thereby preventing the sealing plate 2001 from deviating from a sealing position due to shake in traveling of the vehicle 100, improving the sealing effect of the sealing plate 2001, and improving sealability of the underbody 1, to improve the passenger comfort.

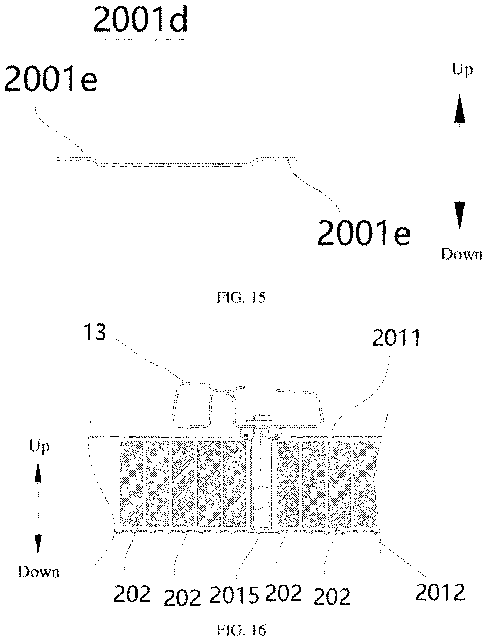

In some embodiments, as shown in FIG. 13 and FIG. 15, the sealing plate 2001 further includes a front sealing plate section 2001d and a rear sealing plate section 2001f. The front sealing plate section 2001d is connected to the front longitudinal beam 5, and the rear sealing plate section 2001f is connected to the middle cross beam 11. The sealing plate 2001 may include the front sealing plate section 2001d and the rear sealing plate section 2001f. A front bent edge 2001e may be arranged on at least one side of the front sealing plate section 2001d in the width direction. The front sealing plate section 2001d is connected to the front longitudinal beam 5 of the underbody 1 through the front bent edge 2001e. A rear bent edge (not shown) may be arranged on at least one side of the rear sealing plate section 2001f in the width direction. The rear sealing plate section 2001f is connected to the middle cross beam 11 of the underbody 1 through the rear bent edge. Through such arrangement of the front sealing plate section 2001d and the rear sealing plate section 2001f connection reliability between the sealing plate 2001 and the underbody 1 is improved, thereby preventing the sealing plate 2001 from deviating from the sealing position due to shake in traveling of the vehicle 100, improving the sealing effect of the sealing plate 2001, and improving sealability of the underbody 1, to improve the passenger comfort.

In some embodiments, referring to FIG. 12, FIG. 16, and FIG. 17, a seat cross beam 13 extending in the width direction is arranged on the underbody 1. A battery pack reinforcing beam 2015 extending in the width direction is arranged on the battery pack 2. The battery pack 2 is connected to the seat cross beam 13 through the battery pack reinforcing beam 2015. The seat cross beam 13 extending in the width direction may be arranged on the underbody 1. A seat is adapted to be arranged on an upper side of the seat cross beam 13. The battery pack reinforcing beam 2015 extending in the width direction may be arranged at a position corresponding to the seat cross beam 13 on the battery pack 2. The battery pack 2 is connected to the seat cross beam 13 through the battery pack reinforcing beam 2015, so that connection reliability between the battery pack 2 and the underbody 1 can be improved, and the safety of the vehicle is improved. In addition, when the collision occurs on the left side or the right side of the vehicle, the side collision force can be transmitted in the width direction of the vehicle through the battery pack reinforcing beam 2015, to reduce an impact of the side collision force is reduced, and prevent the vehicle 100 from greatly deforming due to the side collision force, thereby improving the force-bearing capability of the vehicle 100, and improving the safety of the vehicle 100. An annular edge of the upper surface of the battery pack 2 and the battery pack reinforcing beam 2015 may be connected to the underbody 1 through bolts, to ensure mounting reliability of the battery pack 2.

In the description of the present disclosure, it should be understood that, orientations or position relationships indicated by terms such as "center", "length", "width", "thickness", "up", "down", "front", "back", "left", "right", "top", "bottom", "inner", "outer", "axial", "radial", and "circumferential" are orientations or position relationship shown based on the accompanying drawings, and are merely used for facilitating describing the present disclosure and simplifying the description, rather than indicating or implying that the device or element should have a particular orientation or be constructed and operated in a particular orientation, and therefore, should not be construed as a limitation on the present disclosure.

In the description of the present disclosure, a "first feature" and a "second feature" may include one or more features. In the description of the present disclosure, "multiple" means two or more. In the description of the present disclosure, that a first feature is "above" or "below" a second feature may include that the first feature is in direct contact with the second feature, or may include that the first feature and the second feature are not in direct contact, but in contact through another feature between them. In the description of the present disclosure, that the first feature is "above" the second feature includes that the first feature is directly above or obliquely above the second feature, or merely represents that a horizontal height of the first feature is higher than that of the second feature.

In the description of this specification, the description of the reference terms such as "an embodiment", "some embodiments", "exemplary embodiment", "example", "specific example", or "some examples" means that the specific features, structures, materials or characteristics described with reference to the embodiment or example are included in at least one embodiment or example of the present disclosure. In this specification, schematic descriptions of the foregoing terms do not necessarily indicate a same embodiment or example.

Although the embodiments of the present disclosure have been shown and described, a person of ordinary skill in the art may understand that various changes, modifications, replacements, and variations may be made to the embodiments without departing from the principles and spirit of the present disclosure, and the scope of the present disclosure is defined by the appended claims and their equivalents.

## Claims

1. A vehicle (100), comprising:
an underbody (1);
a front subframe (3), the front subframe (3) being connected to the underbody (1); and
a battery pack (2), the battery pack (2) being connected to the underbody (1), and being arranged on a lower side of the underbody (1),
wherein a rear end surface (31) of the front subframe (3) forms a limiting surface for forward extension of the battery pack (2), and at least a part of an upper surface of the battery pack (2) forms a floor of a vehicle body.

2. The vehicle (100) according to claim 1, wherein a minimum distance between a front end surface (21) of the battery pack (2) and the rear end surface (31) of the front subframe (3) is d₁, wherein d₁ satisfies: 10 mm ≤ d₁ ≤ 100 mm.

3. The vehicle (100) according to claim 1 or 2, wherein the underbody (1) further comprises:
a left rocker rail (18); and
a right rocker rail (18'), the right rocker rail (18') and the left rocker rail (18) being oppositely arranged in a width direction of the vehicle body, the battery pack (2) being connected to the left rocker rail (18) and the right rocker rail (18') to cause the left rocker rail (18) and the right rocker rail (18') to form a battery pack mounting beam (10).

4. The vehicle (100) according to claim 1 or 2, wherein the underbody (1) comprises:
a left rocker rail (18); and
a right rocker rail (18'), the right rocker rail (18') and the left rocker rail (18) being oppositely arranged in a width direction of the vehicle body,
wherein a front end surface (21) of the battery pack (2) extends beyond a front end surface of the left rocker rail (18) and a front end surface of the right rocker rail (18') in a length direction of the vehicle (100).

5. The vehicle (100) according to claim 1 or 2, wherein the underbody (1) further comprises:
a front cross beam (7);
a left rocker rail (18); and
a right rocker rail (18'), the right rocker rail (18') and the left rocker rail (18) being oppositely arranged in a width direction of the vehicle body,
an extending length of the front cross beam (7) in the width direction of the vehicle body being greater than a distance from an inner surface of the left rocker rail (18) to an inner surface of the right rocker rail (18'), and projections of a front end surface of the left rocker rail (18) and a front end surface of the right rocker rail (18') in the width direction overlapping a projection of the front cross beam (7) in the width direction.

6. The vehicle (100) according to any one of claims 3 to 5, wherein the underbody (1) further comprises:
a front cross beam (7); and
A-pillars (6), the A-pillars (6) being oppositely arranged, and two ends of the front cross beam (7) being connected to the A-pillars (6).

7. The vehicle (100) according to claim 6, wherein the underbody (1) further comprises a front longitudinal beam (5), the front longitudinal beam (5) being connected to the front cross beam (7), a rear side of the front longitudinal beam (5) comprising an upper-side force transmission structure (SA) and a lower-side force transmission structure (5B), a rear end of the upper-side force transmission structure (5A) being connected to the front cross beam (7), and a rear end bottom surface of the lower-side force transmission structure (5B) being spaced apart from the battery pack (2) in a vertical direction to form a sealed gap.

8. The vehicle (100) according to claim 7, wherein the lower-side force transmission structure (5B) is a Y-shaped structure;
or
the lower-side force transmission structure (5B) is connected to the left rocker rail (18), the right rocker rail (18'), and a central channel (4).

9. The vehicle (100) according to claim 7 or 8, wherein the rear end bottom surface of the lower-side force transmission structure (5B) is parallel to a top surface of the battery pack (2).

10. The vehicle (100) according to any one of claims 1 to 5, wherein the underbody (1) further comprises a front longitudinal beam (5),
a rear end bottom surface of the front longitudinal beam (5) being spaced apart from a top surface of the battery pack (2) in a vertical direction to form a sealed gap, and the rear end bottom surface of the front longitudinal beam (5) being parallel to the top surface of the battery pack (2).

11. The vehicle (100) according to claim 10, wherein the front longitudinal beam (5) comprises:
a left-front longitudinal beam (501); and
a right-front longitudinal beam (501'), the right-front longitudinal beam (501') and the left-front longitudinal beam (501) being spaced apart in a left-right direction of the vehicle (100), a bottom cross beam (14) being connected between the left-front longitudinal beam (501) and the right-front longitudinal beam (501'), a bottom surface of the bottom cross beam (14) being spaced apart from the top surface of the battery pack (2) in the vertical direction, and the bottom surface of the bottom cross beam (14) being parallel to the top surface of the battery pack (2).

12. The vehicle (100) according to any one of claims 3 to 5, further comprising:
a rear subframe (8), the rear subframe (8) being connected to the underbody (1),
wherein a front end surface of the rear subframe (8) forms a limiting surface for backward extension of the battery pack (2).

13. The vehicle (100) according to claim 12, wherein the underbody (1) further comprises:
a middle cross beam (11); and
two rear longitudinal beams (9), the two rear longitudinal beams (9) being spaced apart,
wherein the middle cross beam (11) extends in the width direction of the vehicle (100), and is connected to the rear longitudinal beams (9) and the left rocker rail (18) and the right rocker rail (18').

14. The vehicle (100) according to claim 13, wherein
the middle cross beam (11) forms a battery pack mounting beam (10), wherein a lower surface of the middle cross beam (11) is spaced apart from a top surface of the battery pack (2) in a vertical direction to form a sealed gap; or
subframe mounting bases (15) are arranged at intervals on the middle cross beam (11).

15. The vehicle (100) according to any one of claims 1 to 14, wherein the battery pack (2) comprises:
an upper housing (2011) of the battery pack;
a lower housing (2012) of the battery pack; and
at least one battery cell (202),
wherein the upper housing (2011) of the battery pack and the lower housing (2012) of the battery pack form an accommodating space (2013), and the at least one battery cell (202) is arranged in the accommodating space (2013),
wherein at least a part of the upper surface of the upper housing (2011) of the battery pack forms the floor of the vehicle body.

16. The vehicle (100) according to claim 15, wherein the battery cell (202) is fixedly connected to the upper housing (2011) of the battery pack, and a top surface of the battery cell (202) is bonded with the upper housing (2011) of the battery pack; or
the lower housing (2012) of the battery pack is a cooling plate, and a bottom surface of the battery cell (202) is bonded with the lower housing (2012) of the battery pack through a thermal adhesive (204).

17. The vehicle (100) according to any one of claims 1 to 16, wherein the battery pack (2) comprises a plurality of battery cells (202), a length direction of the battery cells (202) being the length direction of the vehicle (100), and the plurality of battery cells (202) being arranged side by side in the width direction of the vehicle (100).

18. The vehicle (100) according to any one of claims 3 to 8, wherein a sealing plate assembly (20) is arranged on the underbody (1), and the upper surface of the battery pack (2) is hermetically connected to the sealing plate assembly (20), the sealing plate assembly (20) being an annular sealing plate (2001),
the vehicle (100) comprising at least one sealing member (2002), the at least one sealing member (2002) being arranged between the annular sealing plate (2001) and the battery pack (2).

19. The vehicle (100) according to claim 18, wherein the sealing plate (2001) comprises a first plane portion (2001a), and the battery pack (2) comprises a second plane portion (2014), the first plane portion (2001a) being opposite to the second plane portion (2014), and the at least one sealing member (2002) being arranged between the first plane portion (2001a) and the second plane portion (2014); or
the sealing plate (2001) comprises a left sealing plate section (2001b) and a right sealing plate section (2001b'), a left end of the left sealing plate section (2001b) being provided with a left bent edge (2001c), and the left sealing plate section (2001b) being connected to the left rocker rail (18) through the left bent edge (2001c); and a right end of the right sealing plate section (2001b') being provided with a right bent edge (2001c'), and the right sealing plate section (2001b') being connected to the right rocker rail (18') through the right bent edge (2001c'); and the sealing plate (2001) further comprises a front sealing plate section (2001d) and a rear sealing plate section (2001f), the front sealing plate section (2001d) being connected to a front longitudinal beam (5), and the rear sealing plate section (2001f) being connected to a middle cross beam (11).

20. The vehicle (100) according to any one of claims 1 to 19, wherein a seat cross beam (13) extending in the width direction is arranged on the underbody (1); and
a battery pack reinforcing beam (2015) extending in the width direction is arranged on the battery pack (2), the battery pack reinforcing beam (2015) being connected to the seat cross beam (13).
